# EUROPÄISCHE PATENTANMELDUNG

(11) **EP 4 610 609 A1**
(43) Veröffentlichungstag der Anmeldung: **03.09.2025**
(21) Anmeldenummer: 24160312.5
(22) Anmeldetag: 28.02.2024
(51) Int. Cl.: G01K 7/32, G01K 15/00

(54) **VERFAHREN ZUR TEMPERATURBESTIMMUNG EINES HALBLEITER-CHIPS IN EINEM LEISTUNGSHALBLEITER-MODUL SOWIE LEISTUNGSHALBLEITER-MODUL MIT INTEGRIERTER TEMPERATURÜBERWACHUNG**

(71) Anmelder: Siemens Aktiengesellschaft, 80333 München (DE)
(72) Erfinder: Bickel, Heinz Dietrich Philipp, 81677 München (DE); Kriegel, Kai, 81739 München (DE); Mitic, Gerhard, 81827 München (DE); Walbrecker-Baar, Christian, 85757 Karlsfeld (DE)
(74) Vertreter: Siemens Patent Attorneys

(57) **Zusammenfassung**

Die vorliegende Erfindung betrifft ein Verfahren zur Temperaturbestimmung eines HalbleiterChips in einem Leistungshalbleiter-Modul sowie eine Leistungshalbleiter-Modul mit integrierter Temperaturüberwachung.

## Beschreibung

Die vorliegende Erfindung betrifft ein Verfahren zur Temperaturbestimmung eines Halbleiter-Chips in einem Leistungshalbleiter-Modul sowie ein Leistungshalbleiter-Modul mit integrierter Temperaturüberwachung.

Leistungshalbleiter-Module weisen eine hohe, aber begrenzte Lebensdauer auf, welche im Wesentlichen aus der thermischen Belastung im Betrieb und insbesondere aus großen Temperaturschwankungen resultiert. Aufgrund der unterschiedlichen Ausdehnungskoeffizienten der Aufbaumaterialien der Module entstehen im Bereich der Verbindungen der unterschiedlichen Materialien thermisch induzierte, mechanische Spannungen, welche schließlich zu Rissen, Delaminationen oder Fehlstellen führen. Die häufigsten Ausfallursachen für Leistungshalbleiter-Module bilden dabei die Bonddrähte und Lotschichten. Typische Fehlermechanismen sind der Bond Lift-Off, das heißt das Abheben bis hin zum Riss des Bonddrahtes, der Heel-Crack oder die Lotermüdung von Chip- und Systemlot, welches das unterliegende Lot des Keramikträgers umfasst.

Im Rahmen der Leistungsmodul-Entwicklung haben sich in der Praxis zur Abgabe einer Lebensdauer-Prognose beschleunigte Alterungstests etabliert. Zu diesen Tests gehören beispielsweise Lastzyklen-Tests oder die direkte Durchführung von Temperaturzyklen. Hierbei wird in standardisierten Versuchsaufbauten eine bestimmte Zyklenzahl vorgegeben, welche ein Modul ohne Verlust der eigentlichen Funktionalität durchlaufen muss. Über einen Temperaturfühler am Modul und mathematische Wahrscheinlichkeitsverteilungen lässt sich dann ein ungefährer Alterungsgrad voraussagen. Der eigentliche Nachweis der tatsächlichen Alterung kann nach den Alterungstests beispielsweise durch ein Öffnen des Moduls und einem Schliff erfolgen. Weiterhin lässt sich der Alterungsgrad von Leistungshalbleiter-Modulen durch diverse Verfahren auch ortsaufgelöst bestimmen. Zu diesen Verfahren zählen beispielsweise das Röntgen, die Ultraschallmikroskopie oder die Thermographie. Diese bildgebenden Verfahren ermöglichen eine Detektion der erwähnten Alterungserscheinungen, jedoch sind diese sehr aufwändig und in den seltensten Fällen in der Anwendungsumgebung des Moduls durchführbar.

Vor diesem Hintergrund des Standes der Technik ist es daher Aufgabe der Erfindung, ein verbessertes Verfahren zur Temperaturmessung eines Halbleiter-Chips in einer elektronischen Baugruppe sowie ein System zur Ausführung dieses verbesserten Verfahrens zu schaffen. Insbesondere soll mit dem erfindungsgemäßen Verfahren zur Temperaturmessung eine einfache, kostengünstige und zuverlässige Überprüfung der Temperatur des Halbleiter-Chips in einem Leistungshalbleiter-Modul in der Betriebsumgebung und unter Betriebsbedingungen ermöglicht werden.

Diese Aufgabe der Erfindung wird mit einem Verfahren mit den im Anspruch 1 angegebenen Merkmalen sowie mit einem System mit den in Anspruch 11 angegebenen Merkmalen gelöst.

Bevorzugte Weiterbildungen der Erfindung sind in den zugehörigen Unteransprüchen, der nachfolgenden Beschreibung und der Zeichnung angegeben.

Das erfindungsgemäße Verfahren ist ein Verfahren zur Bestimmung der Temperatur eines Halbleiter-Chips in einer elektronischen Baugruppe, wobei das Verfahren mindestens die Verfahrensschritte umfasst:
a) Korrelieren der mechanischen Eigenresonanzfrequenz des Halbleiter-Chips in der elektronischen Baugruppe als Funktion der Temperatur, wobei die Korrelation der mechanischen Eigenresonanzfrequenzen für einen spezifischen Aufbau der elektronischen Baugruppe und/oder für einen spezifischen Aufbau des Halbleiter-Chips durchgeführt wird;
b) Bestimmung der aktuellen mechanischen Eigenresonanzfrequenz des Halbleiter-Chips unter Betriebsbedingungen der elektronischen Baugruppe;
c) Bestimmung der Halbleiter-Chip-Temperatur aus der im Verfahrensschritt b) bestimmten, mechanischen Eigenresonanzfrequenz unter Verwendung der ermittelten Korrelation aus dem Verfahrensschritt a);
d) Ausgeben der im Verfahrensschritt c) bestimmten Temperatur und/oder Ablegen der im Verfahrensschritt c) bestimmten Temperatur in einem elektronischen Speicher.

Überraschenderweise wurde gefunden, dass sich über die Bestimmung der Eigenresonanzfrequenzen eines Halbleiter-Chips in einer elektronischen Baugruppe hoch mit der aktuellen Temperatur des Halbleiter-Chips korrelierte Ergebnisse erhalten lassen. Die Bestimmungsmethode ist verlässlich, kostengünstig und lässt sich im Vergleich zur Messung der Temperatur über ein Thermoelement deutlich weniger fehleranfällig implementieren. Der Einbau von Thermoelementen kann zu Fehlstellen in der Einkapselung des Halbleiter-Chips führen, welche mit einer verstärkten Korrosion durch Eindringen unerwünschter Fremdstoffe verbunden sein kann. Die Messung der Eigenresonanzfrequenz hingegen kann deutlich weniger invasiv in Bezug auf die Verkapselung des Halbleiter-Chips erfolgen, welches die Anwendungsdauer des Verfahrens und insgesamt die Lebensdauer des Moduls erhöht. Die Bestimmung der Chip-Temperatur über die mechanische Eigenresonanz ermöglicht eine insgesamt genauere und technisch einfachere Bestimmung der Chiptemperatur. Insbesondere kann sich das Verfahren für Wide-Bandgap-Halbleiter wie SiC und GaN eignen, welche zunehmend in der Leistungselektronik verwendet werden. Diese Materialien weisen piezoelektrische Eigenschaften auf und können durch elektrische Anregung in kleinste mechanische Schwingung versetzt werden. Ebenso können diese Schwingungen durch den piezoelektrischen Effekt in ein elektrisches Signal umgewandelt werden, wodurch die Wide-Bandgap-Halbleiter vorteilhafterweise sowohl als Aktor als auch als Sensor genutzt werden können. Für nicht piezoelektrische Chipmaterialien kann die Aktor- und die Sensorfunktion jeweils über separate Funktionalitäten, beispielsweise in Form eines Schwingungs-Aktors und eines Schwingungs-Sensors, eingeführt werden. Durch die Bestimmung der Resonanzfrequenz im Allgemeinen und insbesondere für einen Wide-Bandgap-Halbleiterchips kann auf die aktuelle Temperatur in diesem geschlossen werden, da die Resonanzfrequenz sensitiv von der Temperatur abhängt. Die Materialeigenschaften und die Geometrie legen zunächst eine Resonanzfrequenz fest. Für eine Temperaturveränderung ergibt sich durch die Ausdehnung des Materials und durch die Änderung des Elastizitätsmoduls eine veränderte Chip-Resonanzfrequenz. Mit steigender Temperatur ist beispielsweise eine niedrigere resultierende Resonanzfrequenz zu erwarten. Somit stellt die Resonanzfrequenz eines Chips einen neuen und verlässlichen temperatursensitiven Parameter im Bereich der Leistungselektronikbereich dar.

Das erfindungsgemäße Verfahren ist ein Verfahren zur Bestimmung der Temperatur eines Halbleiter-Chips in einer elektronischen Baugruppe. Elektronische Baugruppe sind beispielsweise Leistungshalbleiter-Module oder allgemein Bauelemente der Leistungselektronik. Zu diesen gehören bipolare Leistungstransistoren, wie Schaltnetzteile und DC/DC-Wandler, Leistungs-MOSFET, IGBTs, Motorsteuerungen und Umrichter, außerdem Thyristoren, insbesondere Stromrichter, Halbleiterrelais, Impulsstromquellen, Ansteuerungen von Thyristoren, oder GTO-Thyristoren. Das Verfahren zur Temperaturbestimmung beinhaltet zumindest die quantitative Erfassung und Auswertung der gerade vorliegenden Eigenfrequenz des Halbleiter-Chips der elektronischen Baugruppe, welches Aussagen über aktuell anliegende Temperatur am Halbleiter-Chip erlaubt. Das Verfahren ermöglicht somit eine einfache, verlässliche, nicht-destruktive, im Bauteilbetrieb durchführbare Detektion der Temperatur des Halbleiter-Chips oder indirekt weiterer Teile der leistungselektronischen Baugruppe.

Das Verfahren umfasst den Verfahrensschritt a), in welchem ein Korrelieren der mechanischen Eigenresonanzfrequenz des Halbleiter-Chips in der elektronischen Baugruppe als Funktion der Temperatur erfolgt, wobei die Korrelation der mechanischen Eigenresonanzfrequenzen für einen spezifischen Aufbau der elektronischen Baugruppe und/oder für einen spezifischen Aufbau des Halbleiter-Chips durchgeführt wird. Unter der Eigenresonanzfrequenz des Chip-Aufbaus wird diejenige Frequenz verstanden, bei welcher die Amplitude einer erzwungenen Schwingung maximal wird. Weist ein Halbleiter-Chip mehrere Eigenresonanzfrequenzen auf, so kann eine oder mehrere dieser Frequenzen betrachtet werden. Die Eigenresonanzfrequenz des Chips ergibt sich als zusammengesetzte Größe, in welche zumindest die Materialeigenschaften, die Geometrie und die Abmaße, die mechanische Anbindung des Chips an seine Umgebung sowie die Temperatur eingeht. Die geometrischen und die Materialgrößen sind bei gegebener Geometrie eines Halbleiter-Bauteils innerhalb einer Baureihe bekannt und konstant, sodass die Eigenresonanzfrequenz des Chips als Funktion der Temperatur eine eindeutige und zuverlässige Korrelation zulässt. Der zur Kalibration geeignete Temperaturbereich kann sich beispielsweise zwischen -20°C und 300°C erstrecken.

Das Verfahren umfasst den Verfahrensschritt b), in welchem die Bestimmung der aktuellen mechanischen Eigenresonanzfrequenz des Halbleiter-Chips unter Betriebsbedingungen der elektronischen Baugruppe erfolgt. Im laufenden Betrieb des Halbleiter-Moduls kann die mechanische Eigenresonanzfrequenz des Halbleiter-Chips, beispielsweise mittels einer Schwingungsanregung des Chips mit unterschiedlichen Frequenzen innerhalb eines gegebenen Frequenzbereiches und Detektion der Schwingungs-Amplitude des Halbleiter-Chips bestimmt werden. Die mechanischen Eigenresonanzfrequenz ergibt sich bei der maximalen Amplitude innerhalb des getesteten Frequenzbereiches.

Das Verfahren umfasst den Verfahrensschritt c) in welchem die Bestimmung der Halbleiter-Chip-Temperatur aus der im Verfahrensschritt b) bestimmten, mechanischen Eigenresonanzfrequenz unter Verwendung der ermittelten Korrelation aus dem Verfahrensschritt a) erfolgt. Aus der bekannten mathematische Korrelationsfunktion zwischen der mechanischen Eigenresonanzfrequenz des betreffenden Halbleiter-Chips (einer vorgegebenen Baureihe oder Geometrie) und den aktuellen gemessenen Werten, kann die aktuell am Chip anliegende Temperatur errechnet werden.

Das Verfahren umfasst den Verfahrensschritt d), in welchem ein Ausgeben der im Verfahrensschritt c) bestimmten Temperatur und/oder Ablegen der im Verfahrensschritt c) bestimmten Temperatur in einem elektronischen Speicher erfolgt. Die im vorhergehenden Verfahrensschritt errechnete Temperatur kann zur weiteren Verwendung entweder innerhalb eines elektronischen Speichers zwischengespeichert oder sofort, beispielsweise optisch oder akustisch, ausgegeben werden. Es ist möglich, dass eine Ausgabe in den Fällen erfolgt, in denen die Temperatur einen bestimmten Mindestwert überschreitet. Alternativ kann in den Fällen eine Warnung ausgegeben werden, in denen ein vorher definierter Maximalwert erreicht wird. Die Ablage in einem Speicher kann zu Archivierungszwecken erfolgen oder diese Werte können im Zuge einer Kontrolle oder Wartung ausgelesen werden. Der Speicher muss nicht Bestanteil des Leistungs-Moduls sein, sondern kann auch Teil eines weiteren Überwachungssystems sein. Die Werte können in einer integralen Betrachtungsweise zur Prognose über die Restlebensdauer des Bauteils oder des Chips verwendet werden.

In einer bevorzugten Ausführungsform des Verfahrens kann der Halbleiter-Chip ein piezoelektrisches Halbleiter-Chip sein. Das erfindungsgemäße Verfahren eignet sich insbesondere für die Aufbauten, in denen der Halbleiter-Chip aus einem piezoelektrischen Material besteht oder dieses enthält. In dieser Ausgestaltung kann der Chip selbst, ohne weitere Aktoren oder Sensoren zur Bestimmung der Eigenresonanzfrequenz verwendet werden. Es ergibt sich ein sehr verlässlicher und kostengünstiger Aufbau, welcher die Möglichkeit erschließt, wirklich unmittelbar die Schwingungseigenschaften des Chips ohne weitere Aufbauten oder zusätzlich funktionale Teile zu bestimmen.

In einem weiter bevorzugten Aspekt des Verfahrens kann der Halbleiter-Chip ein SiC- oder ein GaN-Halbleiterbauteil sein. Gerade die Galliumnitrid und die Siliciumcarbid-Halbleiter-Chips eignen sich im besonderen Maße zur Bestimmung von Eigenresonanzfrequenzen. Es ergeben sich schon unter relativ geringen Anregungsspannungen hohe mechanische Auslenkungen des Chips, welche eine sehr sensitive Kalibration der Temperaturabhängigkeit erlaubt.

In einer weiterhin bevorzugten Charakteristik des Verfahrens kann der Verfahrensschritt b) mittels eines am Halbleiter-Chip angeordneten MEMS (mikro-elektro-mechanisches System)-Sensors und/oder eines MEMS-Aktors erfolgen, wobei der MEMS-Sensor dazu eingerichtet ist mechanische Schwingungen des Halbleiter-Chips zu detektieren und der MEMS-Aktor dazu eingerichtet ist das Halbleiter-Chip in Schwingungen zu versetzen. Neben der Verwendung piezoelektrischer Halbleiter-Chips mit intrinsischer Eignung zur Bestimmung der Resonanzfrequenz, können auch nicht piezoelektrische Halbleiter-Chips im erfindungsgemäßen Verfahren verwendet werden. Dazu werden die Halbleiter-Chips mit mindestens einem Aktor und mindestens einem Sensor versehen. Der Aktor generiert mit unterschiedlichen Frequenzen eine mechanische Anregung des Chips, wohingegen der Sensor die Amplitude der mechanischen Auslenkung des Chips als Funktion der angelegten Anregungsfrequenz bestimmt. Derart kann die Eigenresonanzfrequenz des Chips sehr genau bestimmt werden. MEMS-Sensoren eignen sich dazu im besonderen Maße, da diese durch ihr Gewicht und die Abmessungen das mechanische System des Halbleiter-Chips möglichst wenig stören.

In einer bevorzugten Ausführungsform des Verfahrens kann der Verfahrensschritt b) mittels eines am Halbleiter-Chip angeordneten SAW (Surface acoustic wave)-Sensors erfolgen, wobei der SAW-Sensor dazu eingerichtet ist die mechanischen Schwingungen des Halbleiter-Chips zu detektieren. Zur verlässlichen Detektion der Schwingungsantwort des Halbleiter-Chips hat sich die Verwendung eines SAW-Sensor als besonders geeignet herausgestellt. Auch unter hohen Temperaturschwankungen kann der Sensor verlässlich über einen langen Zeitraum zur Bestimmung der Eigenresonanzfrequenz genutzt werden.

In einer bevorzugten Charakteristik des Verfahrens kann der Verfahrensschritt b) mittels einer elektrischen Spannungsmessung eines an dem piezoelektrischen Halbleiter-Chip angeordneten elektrischen Widerstands erfolgen, wobei der elektrische Widerstand in einer elektrisch leitenden Verbindung zum piezoelektrischen Halbleiter-Chip steht. Die Ermittlung der Eigenresonanzfrequenz über einem an einem piezoelektrischen Halbleiter-Chip angeordneten Widerstand hat sich über lange Betriebszeiträume auch unter sehr starken Temperaturwechseln als besonders geeignet herausgestellt. Diese Anordnung ist wenig fehleranfällig, robust und kann mit einem geringen Aufwand kostengünstig realisiert werden. Die Eigenresonanzfrequenz wird in diesen Fällen über das Maximum der gemessenen Spannung bestimmt.

In einem weiter bevorzugten Aspekt des Verfahrens können im Verfahrensschritt c) nur Spannungswerte verwendet werden, welche oberhalb eines festgelegten Spannungs-Schwellwertes liegen. Die Robustheit des vorliegenden Verfahrens kann insbesondere dadurch erhöht werden, indem zur Auswertung nur spezifische Spannungswerte verwendet werden, welche an einem piezoelektrischen Halbleiter-Chip mit daran angeordnetem elektrischem Widerstand gemessen werden. Es können derart Messartefakte ausgeschlossen und die statistische Genauigkeit erhöht werden. Geeignete Schwellwerte können beispielsweise innerhalb eines Bereiches von größer oder gleich 0% und kleiner oder gleich 70% abweichend von gemessenen Referenzwerten an Referenzsystemen liegen.

In einer weiterhin bevorzugten Ausführungsform des Verfahrens können im Verfahrensschritt c) nur Resonanzfrequenzen verwendet werden, welche innerhalb eines festgelegten Resonanzfrequenz-Bereiches liegen. Zur statistisch verbesserten Erfassung der Temperatur des Halbleiter-Chips kann es sich insbesondere eignen, dass zur Auswertung nur die Eigenresonanzfrequenzen herangezogen werden, welche innerhalb eines festgelegten Eigenresonanzfrequenzbereiches liegen. Dieser Bereich kann beispielsweise im Rahmen der Kalibrierung aus den aufgenommenen Kalibrierungsdaten abgeschätzt werden und liegt abhängig von der Chip-Größe im Bereich von etwa 100 kHz bis in den niedrigen GHz-Bereich.

In einer bevorzugten Ausführungsform des Verfahrens kann die Bestimmung der aktuellen mechanischen Eigenresonanzfrequenz im Verfahrensschritt b) über eine mechanische Impedanzmessung erfolgen. Die mechanische Impedanz ist der Quotient aus Triebkraft und Schallschnelle und beschreibt den Widerstand, den ein Material einer mechanischen Schwingung entgegensetzt. Mittels dieses Ansatzes lässt sich die Eigenresonanzfrequenz sehr schnell und sicher bestimmen. Durch die piezoelektrische Anregung des Halbleiter-Chips und der Aufnahme der sich daraus ergebenen Schallwellen durch einen in der Nähe des Halbleiter-Chips aufgebrachten Sensors, lassen sich Amplitude und Laufzeit der emittierten Schallwellen berechnen, die Aufschluss über die mechanische Impedanz des Halbleiter-Chips geben.

Des Weiteren erfindungsgemäß ist die Verwendung des erfindungsgemäßen Verfahrens zur Bestimmung der aktuellen Temperatur eines Halbleiter-Chips in einer elektronischen Baugruppe. Das erfindungsgemäße Verfahren eignet sich insbesondere zur indirekten Temperaturmessung von Halbleiter-Chips in elektronischen Baugruppen der Leistungselektronik. Es können die Temperaturen sehr verlässlich und in spezifischen Fällen ohne weiteren apparativen Aufwand unter Betriebsbedingungen ermittelt werden.

Des Weiteren erfindungsgemäß ist ein System zur Bestimmung der aktuellen Temperatur eines Halbleiter-Chips in einer elektronischen Baugruppe, wobei das System mindestens umfasst:
i) ein Halbleiter-Chip in einer elektronischen Baugruppe;
ii) einen Aktor geeignet zur Anregung mechanischer Schwingungen des Halbleiter-Chips;
iii) eine Messvorrichtung eingerichtet zur Bestimmung der mechanischen Eigenfrequenz des Halbleiter-Chips;
iv) eine Auswerteeinheit, wobei die Auswerteinheit dazu eingerichtet ist aus einer hinterlegten Kalibrierung aus den gemessenen mechanischen Eigenfrequenzen des Halbleiter-Chips eine Temperatur des Halbleiter-Chips zu bestimmen;
v) eine Anzeige und/oder Speichereinheit.

Überraschenderweise wurde gefunden, dass sich über oben angegebenes System die Temperatur eines Halbleiter-Chips in einem Leistungsmodul verlässlich und reproduzierbar bestimmen lässt. Die Temperatur des Halbleiter-Chips wird indirekt über die Schwingungseigenschaften, und hier insbesondere die mechanische Eigenresonanzfrequenz, des Chips bestimmt, welche sensitiv auf die Änderungen der Temperatur reagiert. Temperaturänderungen des Halbleiter-Chips führen zu Änderungen in der mechanischen Eigenresonanzfrequenz, sodass aufgrund der mechanischen Änderungen bei festgelegter Geometrie des Chips auf die Temperatur geschlossen werden kann. Ein weiterer Vorteil des erfindungsgemäßen Systems bietet demnach die Möglichkeit einer konstanten Modul-Zustandsüberwachung, auf der gegebenenfalls auch eine Restlebensdauerbestimmung oder - prognose basieren kann. Es werden temperaturbedingte, ungeplante Ausfälle des Moduls vermieden und eine vorausschauende Wartung ermöglicht. Des Weiteren ergibt sich eine kostengünstige Lösung für die Temperaturüberwachung des gesamten Leistungsmoduls in Umrichtern, welche auch für eine Lebensdauerprognose nutzbar ist. Zu den weiteren Vorteilen des erfindungsgemäßen Systems wird explizit auf die im Rahmen des erfindungsgemäßen Verfahrens diskutierten Vorteile Bezug genommen.

Das System umfasst i), einen Halbleiter-Chip in einer elektronischen Baugruppe. Bei der elektronischen Baugruppe handelt es sich insbesondere um eine leistungselektronische Baugruppe, zum Beispiel ein Leistungsmodul. Eine elektronische Baugruppe umfasst wenigstens ein Bauteil, insbesondere ein Halbleiter-Bauelement, z.B. einen Leistungsschalter in Form des Halbleiter-Chips.

Das System umfasst ii), einen Aktor geeignet zur Anregung mechanischer Schwingungen des Halbleiter-Chips. Der Halbleiter selbst oder ein eigens am Halbleiter oder in dessen Nähe angeordnetes Bauteil ist dazu eingerichtet, den Halbleiter-Chip in mechanische Schwingungen zu versetzen. Der Aktor kann beispielsweise elektronisch steuerbar sein, sodass dieser am Halbleiter-Chip unterschiedliche Schwingungsfrequenzen induziert. Solche frequenzsteuerbaren Aktoren sind beispielsweise MEMS-Aktoren. Der Frequenzbereich zur Induzierung der mechanischen Schwingungen durch den Aktor kann beispielsweise von 1 kHz bis zu 25 kHz, des Weiteren bevorzugt von 5 kHz bis zu 20 kHz betragen. Innerhalb dieses Frequenzbereiches lassen sich für eine große Gruppe an Halbleiter-Chips die mechanischen Eigenresonanzfrequenzen als Funktion der Temperatur bestimmen.

Das System umfasst iii), eine Messvorrichtung eingerichtet zur Bestimmung der mechanischen Eigenfrequenz des Halbleiter-Chips. Die Messvorrichtung muss also dazu geeignet sein, die aktuellen Schwingungseigenschaften des Halbleiter-Chips zu erfassen. Dazu kann die Messweinrichtung beispielsweise die gerade vorliegende mechanische Schwingungsfrequenz und die Schwingungsamplitude des Halbleiter-Chips messen.

Das System umfasst iv), eine Auswerteeinheit, wobei die Auswerteinheit dazu eingerichtet ist aus einer hinterlegten Kalibrierung aus den gemessenen mechanischen Eigenfrequenzen des Halbleiter-Chips eine Temperatur des Halbleiter-Chips zu bestimmen. In der Auswerteeinheit ist die einmal an diesem Halbleiter-Chip oder an einem oder mehreren Halbleiter-Chips derselben Leistungsmodul-Baureihe erhobene Temperatur-Eigenresonanzfrequenz-Korrelation hinterlegt. Mit der aktuell von der Messvorrichtung gelieferten Werten kann also die aktuell vorliegende mechanische Eigenresonanzfrequenz bestimmt und aus dieser die Temperatur berechnet werden. Insofern werden von der Auswerteeinheit sowohl die Bestimmung der mechanischen Eigenresonanzfrequenz als auch die Korrelation zu einem Temperaturwert durchgeführt.

Das System umfasst v), eine Anzeige und/oder Speichereinheit. Die Anzeigeeinheit oder die Speichereinheit kann direkt mit der Auswerteeinheit verbunden sein. Somit ist es beispielsweise möglich, dass über die Anzeigeeinheit der aktuell gemessene Temperaturwert stetig ausgegeben wird. Alternativ ist es auch möglich, dass die Anzeigeeinheit nur bei Bedarf die ermittelten Temperaturwerte anzeigt. Die Anzeige kann aber auch dazu eingerichtet sein das Ergebnis der Auswertung in kodierter Form anzuzeigen. Dies kann beispielsweise in Form einer Farbkodierung erfolgen, welche die aktuelle Temperatur des Leistungsmoduls als "normal" oder außerhalb festgelegter Spezifikationen als "Fehler" ausgibt. Die Temperaturwerte als solche oder davon abgeleitete Werte mathematischer Operationen, können ebenfalls in der Speichereinheit abgelegt und beispielsweise über eine Schnittstelle ausgelesen werden. Die Anzeigeeinheit kann am Gehäuse des Leistungsmoduls oder der elektronischen Baugruppe angeordnet sein. Es ist aber auch möglich, dass die Anzeigeeinheit über ein Kommunikationsmittel mit der Auswerteeinheit oder der Speichereinheit verbunden und nicht direkt am Leistungsmodul angeordnet ist.

In einer bevorzugten Ausführungsform des Systems kann das Halbleiter-Chip ein piezoelektrisches Halbleiter-Chip sein. Systeme mit einem piezoelektrischen Halbleiter-Chip können sich in dem erfindungsgemäßen System besonders eignen, da die piezoelektrischen Halbleiter-Chips selbst als Aktor und Sensor fungieren können. In dieser Ausgestaltung entfällt die Notwendigkeit der Anordnung eines separaten Sensors und mechanischen Aktors am Halbleiter-Chip.

In einem bevorzugten Aspekt des Systems kann das System einen elektrischen Widerstand aufweisen, wobei der elektrische Widerstand im elektrischen Kontakt zum Halbleiter-Chip steht und die Messvorrichtung dazu eingerichtet ist die elektrische Spannung am elektrischen Widerstand zu messen. Die Nutzung eines piezoelektrischen Halbleiter-Chips zur Bestimmung der mechanischen Eigenresonanzfrequenz kann insbesondere in den Fällen verlässlich und ohne großen Aufwand erfolgen, indem die Schwingungsanregung und Bestimmung des Schwingungsverhaltens über den Halbleiter-Chip selbst erfolgt und die Messvorrichtung die über den elektrischen Widerstand ausgegebene Spannung abgreift. Dieser elektrische Aufbau kann verlässlich und kostengünstig realisiert werden.

In einer weiterhin bevorzugten Ausführungsform des Systems kann das Halbleiter-Chip eine Wechselspannungsversorgung aufweisen, wobei die Wechselspannungsversorgung dazu eingerichtet ist eine Wechselspannung mit einer Frequenz von größer oder gleich 100 kHz und kleiner oder gleich 10 GHz zu liefern. Die erzwungene mechanische Auslenkung des Halbleiter-Chip zur Bestimmung der mechanischen Eigenresonanzfrequenz kann bevorzugt durch eine Wechselspannungsversorgung erfolgen, welche auf oben angegebenen Frequenzbereich abgestimmt ist. Innerhalb dieses mechanischen Schwingungsanregungsbereiches können für viele Halbleiter-Chip-Geometrien und große Temperaturbereiche verlässlich die mechanischen Eigenresonanzfrequenzen ermittelt werden.

In einer bevorzugten Charakteristik des Systems kann die Wechselspannungsversorgung aus der Gruppe bestehend aus Halbbrücke, Vollbrücke oder Hochfrequenztransformator ausgesucht sein. Zur sicheren und reproduzierbaren Erzeugung einer auch unter Anwendungsbedingungen stabilen Wechselspannungsversorgung am Halbleiter-Chip haben sich oben angegebene Spannungsversorgungen als besonders geeignet herausgestellt.

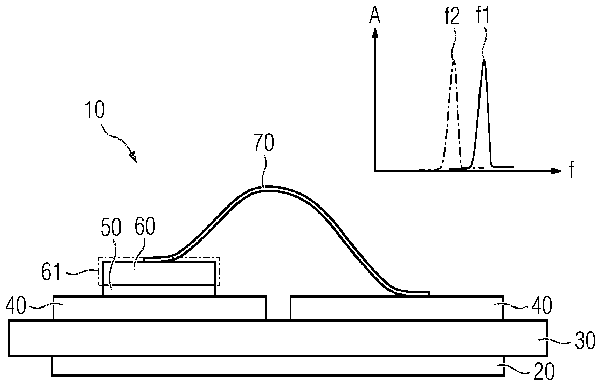

Beispiele und Ausführungsformen der vorliegenden Erfindung werden noch in exemplarischer Weise mit Bezug auf die Figur 1 beschrieben:
Figur 1 zeigt schematisch den Aufbau eines Leistungsmoduls und den Zusammenhang zwischen mechanischer Eigenresonanzfrequenz und der Temperatur des Halbleiter-Chips.

Die Figur 1 zeigt schematisch den Aufbau einer elektronischen Baugruppe 10 und den Zusammenhang zwischen mechanischer Eigenresonanzfrequenz und der Temperatur des Halbleiter-Chips 60, 61. Die elektronischen Baugruppe 10 kann beispielsweise in Form eines Leistungs-Halbleitermoduls vorliegen und umfasst eine untere Kupferanbindung 20 sowie Kupferleitungsbahnen 40, welche durch ein Substrat 30 getrennt sind. Das Substrat 30 kann ein keramisches Substrat 30 sein. Auf einer der Kupferleitungsbahnen 40 auf der Oberseite des Substrats 30 ist ein Lot 50 aufgebracht, welches den eigentlichen Halbleiter-Chip 60, 61 auf der Kupferleitungsbahn 40 fixiert. Der Halbleiter-Chip 60, 61 ist über einen Bonddraht 70 mit einer weiteren Kupferleitungsbahn 40 elektrisch verbunden. Der Halbleiter-Chip 60, 61 ist in zwei Betriebszuständen gezeigt. Der erste Betriebszustand des Halbleiter-Chips 60 befindet sich bei einer Temperatur T1. Durch den Betrieb des Leistungs-Moduls 10 erwärmt sich der Halbleiter-Chip 60, 61 und es wird der zweite Betriebszustand des Halbleiter-Chips 61 bei einer höheren Temperatur T2 eingenommen. Durch die Temperaturerhöhung bedingt, dehnt sich der Halbleiter-Chip 60, 61 aus und ändert seine mechanischen Eigenschaften. Mittels einer Analyse der mechanischen Eigenresonanzfrequenz lässt sich feststellen, dass diese sich als Funktion der Temperatur ändert. Im Diagramm in dieser Figur ist schematisch dargestellt, dass die mechanische Eigenresonanzfrequenz f1 des Halbleiter-Chips 60 bei einer tieferen Temperatur im Vergleich zur mechanischen Eigenresonanzfrequenz f2 des Halbleiter-Chips 61 bei höherer Temperatur höher liegt. Es ergibt sich ein deutlicher Unterschied der mechanischen Eigenresonanzfrequenzen, welche sich eindeutig als Funktion der Temperatur korrelieren lässt. Eine Temperaturerhöhung führt dabei zu einer geringeren mechanischen Eigenresonanzfrequenz. Über die Bestimmung der mechanischen Eigenresonanzfrequenz lässt sich also eindeutig auf die aktuelle Betriebstemperatur des Halbleiter-Chips 60, 61 schließen. Die Bestimmung der mechanischen Eigenresonanzfrequenz des Halbleiter-Chips 60, 61 kann durch einen Aktor (nicht dargestellt) erfolgen, welcher den Halbleiter-Chip 60, 61 innerhalb eines festgelegten Frequenzbereiches in mechanische Schwingungen versetzt. Dazu kann der Aktor beispielsweise am Halbleiter-Chip 60, 61 angeordnet sein. Die Schwingungsfrequenz und -Amplitude des Halbleiter-Chips 60, 61 wird dann durch einen Messvorrichtung in Form eines Schwingungs-Sensors (nicht dargestellt) am Halbleiter-Chip 60, 61 erfasst und aus den Frequenz- und Amplitudenwerten wird in einer Auswerteeinheit (nicht dargestellt) die mechanische Eigenresonanzfrequenz des Halbleiter-Chips 60, 61 bestimmt. Die Auswerteeinheit kann ebenfalls die Umrechnung der ermittelten mechanischen Eigenresonanzfrequenz in den entsprechenden Temperaturwert durchführen. Die Temperatur kann mittels einer Anzeige (nicht dargestellt) ausgegeben oder in einer Speichereinheit (nicht dargestellt) abgelegt werden. In den Fällen, in denen der Halbleiter-Chip 60, 61 piezoelektrische Eigenschaften aufweist, kann dieser selbst als Aktor und Sensor fungieren. Durch Anlegen einer Wechselspannung am Halbleiter-Chip 60, 61 können mechanische Schwingungen des Halbleiter-Chips 60, 61 erzeugt werden. Die Eigenschaften der mechanischen Schwingungen des Halbleiter-Chips 60, 61 können über eine Spannungsmessung am Halbleiter-Chip 60, 61 gemessen werden. Aus den gemessenen Werten lässt sich ebenfalls die aktuell vorliegende mechanische Eigenresonanzfrequenz des Halbleiter-Chips 60, 61 bestimmen. Diese kann dann ausgegeben oder abgelegt werden.

### Bezugszeichenliste

- 10: elektronische Baugruppe
- 20: untere Kupferanbindung
- 30: Substrat
- 40: Kupferleitungsbahnen
- 50: Lot
- 60: Leistungshalbleiter mit niedriger Temperatur
- 61: Leistungshalbleiter mit höherer Temperatur
- 70: Bonddraht

## Patentansprüche

1. Verfahren zur Bestimmung der Temperatur eines Halbleiter-Chips (60, 61) in einer elektronischen Baugruppe (10), mindestens umfassend die Verfahrensschritte
a) Korrelieren der mechanischen Eigenresonanzfrequenz des Halbleiter-Chips (60, 61) in der elektronischen Baugruppe (10) als Funktion der Temperatur, wobei die Korrelation der mechanischen Eigenresonanzfrequenzen für einen spezifischen Aufbau der elektronischen Baugruppe (10) und/oder für einen spezifischen Aufbau des Halbleiter-Chips (60, 61) durchgeführt wird;
b) Bestimmung der aktuellen mechanischen Eigenresonanzfrequenz des Halbleiter-Chips (60, 61) unter Betriebsbedingungen der elektronischen Baugruppe (10);
c) Bestimmung der Halbleiter-Chip-Temperatur aus der im Verfahrensschritt b) bestimmten, mechanischen Eigenresonanzfrequenz unter Verwendung der ermittelten Korrelation aus dem Verfahrensschritt a);
d) Ausgeben der im Verfahrensschritt c) bestimmten Temperatur und/oder Ablegen der im Verfahrensschritt c) bestimmten Temperatur in einem elektronischen Speicher.

2. Verfahren nach Anspruch 1, wobei der Halbleiter-Chip (60, 61) ein piezoelektrischer Halbleiter-Chip ist.

3. Verfahren nach einem der vorhergehenden Ansprüche, wobei der Halbleiter-Chip (60, 61) ein SiC- oder ein GaN-Halbleiterchip ist.

4. Verfahren nach einem der vorhergehenden Ansprüche, wobei der Verfahrensschritt b) mittels eines am Halbleiter-Chip (60, 61) angeordneten MEMS (mikro-elektro-mechanisches System)-Sensors und/oder eines MEMS-Aktors erfolgt, wobei der MEMS-Sensor dazu eingerichtet ist mechanische Schwingungen des Halbleiter-Chips (60, 61) zu detektieren und der MEMS-Aktor dazu eingerichtet ist den Halbleiter-Chip (60, 61) in Schwingungen zu versetzen.

5. Verfahren nach einem der Ansprüche 1 bis 4, wobei der Verfahrensschritt b) mittels eines am Halbleiter-Chip (60, 61) angeordneten SAW (Surface acoustic wave)-Sensors erfolgt, wobei der SAW-Sensor dazu eingerichtet ist die mechanischen Schwingungen des Halbleiter-Chips (60, 61) zu detektieren.

6. Verfahren nach einem der Ansprüche 2 oder 3, wobei der Verfahrensschritt b) mittels einer elektrischen Spannungsmessung eines an dem piezoelektrischen Halbleiter-Chip (60, 61) angeordneten elektrischen Widerstands erfolgt, wobei der elektrische Widerstand in einer elektrisch leitenden Verbindung zum piezoelektrischen Halbleiter-Chip (60, 61) steht.

7. Verfahren nach Anspruch 6, wobei im Verfahrensschritt c) nur Spannungswerte verwendet werden, welche oberhalb eines festgelegten Spannungs-Schwellwertes liegen.

8. Verfahren nach einem der Ansprüche 6 oder 7, wobei im Verfahrensschritt c) nur Resonanzfrequenzen verwendet werden, welche innerhalb eines festgelegten Resonanzfrequenz-Bereiches liegen.

9. Verfahren nach einem der vorhergehenden Ansprüche, wobei die Bestimmung der aktuellen mechanischen Eigenresonanzfrequenz im Verfahrensschritt b) über eine mechanische Impedanzmessung erfolgt.

10. Verwendung eines Verfahrens nach einem der vorhergehenden Ansprüche zur Bestimmung der aktuellen Temperatur eines Halbleiter-Chips (60, 61) in einer elektronischen Baugruppe (10).

11. System zur Bestimmung der aktuellen Temperatur eines Halbleiter-Chips (60, 61) in einer elektronischen Baugruppe (10), **dadurch gekennzeichnet, dass** das System mindestens umfasst
i) ein Halbleiter-Chip (60, 61) in einer elektronischen Baugruppe (10);
ii) einen Aktor geeignet zur Anregung mechanischer Schwingungen des Halbleiter-Chips (60, 61);
iii) eine Messvorrichtung eingerichtet zur Bestimmung der mechanischen Eigenfrequenz des Halbleiter-Chips (60, 61);
iv) eine Auswerteeinheit, wobei die Auswerteinheit dazu eingerichtet ist aus einer hinterlegten Kalibrierung aus den gemessenen mechanischen Eigenfrequenzen des Halbleiter-Chips (60, 61) eine Temperatur des Halbleiter-Chips (60, 61) zu bestimmen;
v) eine Anzeige und/oder Speichereinheit.

12. System nach Anspruch 11, wobei der Halbleiter-Chip (60, 61) ein piezoelektrisches Halbleiter-Chip ist.

13. System nach Anspruch 11, wobei das System einen elektrischen Widerstand aufweist, wobei der elektrische Widerstand im elektrischen Kontakt zum Halbleiter-Chip (60, 61) steht und die Messvorrichtung dazu eingerichtet ist die elektrische Spannung am elektrischen Widerstand zu messen.

14. System nach einem der Ansprüche 12 bis 13, wobei der Halbleiter-Chip (60, 61) eine Wechselspannungsversorgung aufweist, wobei die Wechselspannungsversorgung dazu eingerichtet ist eine Wechselspannung mit einer Frequenz von größer oder gleich 100 kHz und kleiner oder gleich 10 GHz zu liefern.

15. System nach Anspruch 14, wobei die Wechselspannungsversorgung ausgesucht ist aus der Gruppe bestehend aus Halbbrücke, Vollbrücke oder Hochfrequenztransformator.
